(19) Europäisches Patentamt
European Patent Office
Office européen des brevets

(11) Publication number: **0 353 995 B1**

(12) # EUROPEAN PATENT SPECIFICATION

(45) Date of publication of patent specification: **02.02.94**

(51) Int. Cl.$^5$: **B62D 15/02**, B62D 6/04

(21) Application number: **89307809.7**

(22) Date of filing: **01.08.89**

(54) **Steering wheel turning angle detector and method for controlling yawing of vehicle.**

(30) Priority: **01.08.88 JP 192301/88**
**01.08.88 JP 192302/88**

(43) Date of publication of application:
**07.02.90 Bulletin 90/06**

(45) Publication of the grant of the patent:
**02.02.94 Bulletin 94/05**

(84) Designated Contracting States:
**DE FR GB SE**

(56) References cited:
**EP-A- 0 296 756**
**DE-A- 3 300 640**
**GB-A- 2 154 523**
**GB-A- 2 203 395**
**US-A- 4 722 545**

**PATENT ABSTRACTS OF JAPAN, vol. 7, no. 244 (M-252)[1389], 28th October 1983; & JP-A-58 128 962 (HINO JIDOSHA KOGYO) 01-08-1983**

(73) Proprietor: **HONDA GIKEN KOGYO KABUSHIKI KAISHA**
**1-1, 2-chome**
**Minami-Aoyama**
**Minato-ku Tokyo(JP)**

(72) Inventor: **Shiraishi, Syuji K.K. Honda Gijyutsu Kenkyusho**
**4-1, 1-chome**
**Chuo**
**Wako-shi Saitama(JP)**
Inventor: **Yamamoto, Osamu K.K. Honda Gijyutsu Kenkyusho**
**4-1, 1-chome**
**Chuo**
**Wako-shi Saitama(JP)**
Inventor: **Kiryu, Hironobu K.K. Honda Gijyutsu Kenkyusho**
**4-1, 1-chome**
**Chuo**
**Wako-shi Saitama(JP)**

(74) Representative: **Muir, Ian R. et al**
**HASELTINE LAKE & CO.**
**Hazlitt House**
**28 Southampton Buildings**
**Chancery Lane**
**London WC2A 1AT (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 353 995 B1

## Description

The present invention relates to a steering wheel turning angle detector for a vehicle to detect a steering wheel turning angle on the basis of the output of a steering wheel turning angle sensor attached to a steering wheel and a method for controlling yawing of the vehicle on the basis of the steering wheel turning angle sensor.

A known steering wheel turning angle sensor attached to a steering wheel has a pulser for generating a single pulse at the neutral point of a steering wheel turning angle, presumes the neutral point of the steering wheel turning angle to be at the position indicated by the pulser, and hence resets a counted pulse value.

However, when the steering wheel turning angle sensor is attached to the steering wheel, the detected steering wheel turning angle is frequently displaced from the actual steering wheel turning angle. If there is no displacement upon attachment of the steering wheel turning angle sensor, the neutral point might be displaced due to any external force during the traveling of the vehicle. If the neutral point is displaced in this manner, since the counted pulse value is reset upon reception of the neutral point pulse even if the neutral point pulse does not coincide with the neutral point of the actual steering wheel turning angle, the counted value does not indicate a suitable steering angle value.

Further, a steering wheel turning angle sensor attached to a steering wheel counts the pulses of a puller provided in a steering column to measure a steering wheel turning angle, and the yawing of a vehicle is controlled with the detected steering wheel turning angle value.

GB-A-2154523 discloses a steering control system comprising a steering wheel turning angle sensor attached to a steering wheel to detect a steering wheel turning angle, in which the ratio of said angle to the angle by which the steerable road wheels are turned is variable.

The present invention seeks to provide a method for controlling a vehicle and a steering control system which alleviate the difficulties associated with conventional arrangements.

According to a first aspect of the present invention, there is provided a method for controlling yawing of a vehicle on the basis of the output of a steering wheel turning angle sensor attached to a steering wheel comprising the steps of obtaining a presumed steering wheel turning angle and gradually correcting the output value of said steering wheel turning angle sensor, on the basis of an error between said presumed steering wheel turning angle and the steering wheel turning angle output from said steering wheel turning angle sensor, over a predetermined period of time.

In a preferred embodiment of the invention, the step of obtaining the presumed steering wheel angle includes detecting the yaw rate of the vehicle.

In an alternative preferred embodiment of the invention, the step of obtaining the presumed steering wheel turning angle includes detecting a difference between wheel speeds of left and right wheels of the vehicle.

According to a second aspect of the present invention, there is provided a steering control system, for controlling yawing of a vehicle, the system comprising: a steering wheel turning angle sensor attached to a steering wheel to detect a steering wheel turning angle; means for calculating a presumed steering wheel turning angle; means for correcting the output value of said steering wheel turning angle sensor, on the basis of an error between said presumed said steering wheel turning angle and the steering wheel turning angle output from said steering wheel turning angle sensor, over a predetermined period of time; and means for controlling yawing of the vehicle on the basis of the corrected output value of the steering wheel turning angle sensor.

In a preferred embodiment of the second aspect of the invention, the system comprises yawing detecting means for detecting the yawing state of the vehicle, the steering wheel turning means obtaining a presumed steering wheel turning angle from the yawing state.

In an alternative preferred aspect of the invention, the system comprises wheel speed difference detecting means for detecting the difference between the speeds of left and right wheels of the vehicle, the steering wheel turning angle presumed means obtaining the presumed steering wheel turning angle from said difference between the left and right wheels speeds.

For a better understanding of the present invention, and to show how it may be brought into effect, reference will now be made, by way of example, to the accompanying drawings, in which:-

Figure 1 is a block diagram showing one embodiment of the invention;

Figure 2 is a flowchart showing a processing procedure;

Figure 3 is a graph showing an allowable steering angle range;

Figure 4 is a view showing an allowable range for determining the yaw rate and the normal range of the steering wheel turning angle;

Figure 5 is a characteristic diagram showing a reference steering gain;

Figure 6 is a view showing the relationship between the yaw rate and the steering wheel turning angle with constant vehicle speed;

Figure 7 is a graph illustrating a steering wheel turning angle correcting procedure; and

Figure 8 is a block diagram, corresponding to Figure 1, showing an alternative embodiment of the present invention.

Referring first to Figure 1, showing an embodiment of the present invention, speed sensors Sl and Sr are respectively attached to left and right rear wheels Wrl and Wrr as freely rotatable wheels in a front wheel drive vehicle. The output signals of the speed sensors Sl and Sr are inputted to a steering wheel turning angle detector 1 including a computer. A steering wheel turning angle sensor 2 is attached to a steering wheel H, and the output of the steering wheel turning angle sensor 2 is also inputted to the steering wheel turning angle detector 1.

The steering wheel turning angle detector 1 includes a computer, and comprises a yawing detecting means 3 for detecting a yaw rate R as the yawing state of the vehicle from the outputs of both the speed sensors Sl and Sr, vehicle speed detecting means 13 for detecting a vehicle speed V from the mean value of the outputs of both the speed sensors Sl and Sr, steering gain determining means 14 for determining a steering gain from the output of the yawing detecting means 13, steering wheel turning angle presuming means 4 for calculating a presumed steering wheel turning angle $\delta_p$ of the vehicle on the basis of the steering gain G and the yaw rate R, and steering wheel turning angle correcting means 5 for correcting the output S of the steering wheel turning angle sensor 2 using the output of the steering wheel turning angle presuming means 4. The steering wheel turning angle correcting means 5 comprises an error detector 6 for detecting an error between the output S of the steering wheel turning angle presuming mens 4, and a correcting circuit 7 for correcting the output of the steering wheel turning angle sensor 2 on the basis of the error thus calculated.

The vehicle speed, as calculated by the vehicle speed detecting means 13, and the steering wheel turning angle $\delta'$ obtained by the steering wheel turning angle detector 1 are inputted to reference yaw rate generating means 8, and the reference yaw rate obtained by the reference yaw rate generating means 8 and the yaw rate R obtained by the yawing detecting means 3 are inputted to a subtractor 9. The subtractor 9 calculates the absolute value of the difference between the reference yaw rate and the yaw rate R. In other words, the displacement of the present yaw rate R from the present reference yaw rate is obtained. The output of the subtractor 9 is inputted to the non-inverting input terminal of a comparator 10, and a reference value is inputted from the terminal 11 to the inverting input terminal of the comparator 10. Accordingly, the comparator 10 outputs a signal of high level when the displacement of the present yaw rate R from the present reference yaw rate is equal to or larger than the reference value, and the output of the comparator 10 is inputted to yawing correcting means 12, such as, for example, means for correcting yawing under the control of the output of an automotive engine.

The steering wheel turning angle detector 1 of the computer obtains a steering wheel turning angle by a procedure shown in Figure 2. In a first step S1, whether a flag F is "1" or not is first determined. The flag F displays whether it is correcting a steering angle or not at present, and the flag F being equal to "1" displays the correcting of the steering angle at present. In the case F = 1 in the first step S1, the process advances to a nineteenth step S19, and in the case F = 0, the process advances to a second step S2.

The second to tenth steps S2 to S10 determine whether the driving state of the vehicle is in a normal range adapted to correct the steering angle or not, and when these steps S2 to S10 determine the state to be out of the normal range, a timer Ts is reset in an eleventh step S11. The time Ts counts a time required to determine whether the vehicle is in the normal state or not, e.g., two seconds, and the timer Ts is reset whenever the steps S2 to S10 determine the state to be out of the normal range.

Factors for determining whether the vehicle is in the normal range or not will be individually described. The second step S2 first determines whether or not the vehicle speed V is equal to or higher than a lower limit speed, such as, for example, 8 km/hr, the third step S3 determines whether or not the vehicle speed V is equal to or lower than an upper limit speed, such as, for example, 50 km/hr, the fourth step S4 determines whether or not the yaw rate R of the vehicle is equal to or lower than a maximum allowable yaw rate, such as, for example, 5°/sec, the fifth step S5 determines whether or not any system for controlling traction, for example by decreasing the output of a brake or the engine to suppress the excessive slip of a driving wheel, is in operation and the sixth step S6 determines whether or not the steering angle S is within an allowable steering angle range. The allowable steering angle range is determined in response to the vehicle speed V as shown in Figure 3. Thus the allowable steering angle range is set smaller as the vehicle speed becomes higher.

The seventh step S7 and the eighth step S8 determine respectively whether the yaw rate R and the steering wheel turning angle S at this time are greater than the previous mean yaw rate $R_A'$ and the mean steering wheel turning angle $S_A'$ set immediately after a correction is finished in a twentythird step S23 to be described later, and when the previous mean yaw rate $R_A'$ or the mean steering wheel turning angle $S_A'$ is equal to or lower than the present yaw rate R or the steering wheel turning angle S as the case may be, the process advances to the eleventh step S11. This means that a correcting operation is started only when the vehicle is at the side of a straight traveling from the mean yaw rate $R_A$ or the mean steering wheel turning angle $S_A$ when the error of the steering wheel turning angle sensor 2 was corrected the previous time, thereby obtaining more accurate presumed steering wheel turning angle.

The ninth step S9 determines whether the yaw rate R is in the normal range or not. The normal range is set to the range designated by shading in Figure 4, and determined to be within the normal range (in a normal turning or straight traveling state) from the central value of the yaw rate R with the yaw rate R when all the conditions from the second step S2 to the eighth step S8 are satisfied initially as the central value. The ninth step S9 determines whether or not the yaw rate is within the normal range for a set period of time, such as, for example two seconds or longer, as counted by the timer Ts. The tenth step S10 determines whether the steering wheel turning angle S is in the normal range of the yaw rate R, and the tenth step S10 determines whether or not the angle is within the normal range, for example, for two seconds or longer.

As described above, when the second to tenth steps S2 to S10 determine that the driving state of the vehicle is in the normal range, the process advances to a twelfth step S12, and when these steps S2 to S10 determine that the driving state of the vehicle is not in the normal state, the eleventh step S11 resets the timer Ts.

The twelfth step S12 and a thirteenth step S13 calculate the mean value $R_A$ of the yaw rate R and the mean value $S_A$ of the steering wheel turning angle S according to the following first and second equations (1) and (2).

$$R_A = \frac{1}{N} . R + (1 - \frac{1}{N}). R_{A-1} \qquad (1)$$

$$S_A = \frac{1}{N} .S + (1 - \frac{1}{N}).S_{A-1} \qquad (2)$$

where N is the number of cumulative samplings from the start of the calculations of the equations (1) and (2), and the equations (1) and (2) employ so-called moving average for varying the influence to the mean value of the sampling values this time depending upon the elapsed time from the start of calculating the mean value. The suffix $_{-1}$ designates the value at the previous time.

Fourteenth step S14 determines whether the counting of the set time by the timer Ts is finished or not, and when the time Ts for determining the normal range is elapsed, a fifteenth step S15 sets the flag F to "1".

Next, the sixteenth step S16 displays the process in the steering wheel turning angle presuming means 4, which obtains the presumed steering wheel turning angle $\delta_p$ by dividing the mean yaw rate $R_A$ by the steering gain G. In other words, $\delta_p = R_A/G$ is satisfied, and $G = G_0 - G'R$, where the $G_0$ is a reference gain determined depending upon the vehicle speed V as shown in Figure 5, which is obtained theoretically by the following equation (3).

$$G_0 = \frac{1}{n} \cdot \frac{V}{1.(1+ K.V.^2)} \qquad (3)$$

where the n is a steering gear ratio, 1 is a wheel base, and K is a stability factor.

G' is a correction coefficient for reducing the steering gain when the yaw rate R is increased. When the vehicle speed is constant, the relationship between the yaw rate and the steering wheel turning angle becomes as shown in Figure 6, the lateral acceleration to be applied to the vehicle is determined by the yaw rate R and the vehicle speed V, the load movement of the vehicle and the variation in the compliance occur by the influence of the lateral acceleration of the vehicle, and the steering gain is altered in response to them. Accordingly, the correction coefficient G′ is set in response to the vehicle speed, and the steering gain is approximated to the steering gain during actual traveling of the vehicle by correcting the theoretical value $G_0$ of the steering gain by the product of the correction coefficient G′ and the yaw rate R.

A seventeenth step S17 calculates an error $\epsilon_1$. In other words, the seventeenth step $S_{17}$ calculates the difference ( $\epsilon_1 = \delta_p - S_A$) of the steering wheel turning angle presuming means 4 and the mean value $S_A$ of the steering wheel turning angle S obtained by the steering wheel turning angle sensor 2. Further, the eighteenth step S18 calculates as below.

$\Delta\epsilon = \epsilon_1/N_1$ (4)

The $N_1$ is determined in this equation (4) by $N_1 = Tc/T_{loop}$, where Tc is a time set to correct the steering angle value after the normal range is determined as shown in Figure 4, and is designed, for example, to be one second. Accordingly, the equation (4) obtains the correction amount $\Delta\epsilon$ in each one loop in the processing procedure shown in Figure 2.

A nineteenth step S19 obtains a correction value $\epsilon_0$ according to the following equation (5).

$\epsilon_0 = \epsilon_0 + \Delta\epsilon$ (5)

Further, a twentieth step S20 determines whether the time Tc set to correct the steering angle has elapsed or not. If the time Tc has not yet elapsed, the process advances to a twenthfourth step S24, and if the time Tc has elapsed, the process advances to a twentyfirst step S21. The twentyfirst step S21 sets the flag F to zero, a twentythird step S23 sets the mean yaw rate $R_A$ to $R_A'$ and the mean steering wheel turning angle $S_A$ to $S_A'$.

The twentyfourth step S24 calculates the following equation (6) as the steering wheel turning angle $\delta'$ outputted from the steering wheel turning angle detector 1.

$\delta' = S + \epsilon_0$ (6)

The operation of this embodiment will be described. In the processing procedure shown in Fig. 2, the second step S2 to the tenth step S10 determine whether the vehicle is in the normal range or not to correct the steering wheel turning angle S detected by the steering wheel turning angle sensor 2. If the steps S2 to S10 determine that the vehicle is in the normal range, the fifteenth step S15 sets the flag F, and the process advances to the next step.

As described above, after the vehicle is determined to be in the normal driving state, the sixteenth to eighteenth steps S16 to S18 calculate the correction value $\Delta\epsilon$ per one processing loop. In other words, the sixteenth step S16 divides the yaw rate $R_A$ by the steering gain G to obtain the presumed steering angle $\delta p$. Then the seventeenth step S17 obtains the difference $\epsilon_1$ between the presumed steering angle $\delta p$ and the mean steering angle $S_A$ on the basis of the output of the steering wheel turning angle sensor 2, and the eighteenth step S18 obtains the correction amount $\Delta\epsilon$ per one processing loop according to the error $\epsilon_1$. These sixteenth to eighteenth steps S16 to S18 are carried out only in the initial processing loop after the driving state of the vehicle is determined to be in the normal state. Thereafter, the process is transferred from the first step S1 to the nineteenth step S19.

Referring now to Fig. 7, if there is an error $\epsilon_1$ between the detected steering wheel turning angle S of the steering wheel turning angle sensor 2 and the presumed steering wheel turning angle $\delta p$ of the steering wheel turning angle presuming means 4, the correction value $\epsilon_0$ increased by the correction value $\Delta\epsilon$ during each processing loop, is added to the steering wheel turning angle S, and the output $\delta'$ of the steering wheel turning angle detector 1 is corrected to the presumed steering wheel turning angle $\delta p$ until the set time has elapsed. In other words, the difference between the detected steering wheel turning angle S and the presumed steering wheel turning angle is gradually returned to zero while the set time Tc elapses. Thus, abrupt correction control by the yawing correcting means 12 is avoided by correcting in this redundancy process, and the correction of the yawing can be smoothly carried out.

Fig. 8 shows another embodiment of the present invention, wherein the same reference numerals as those in the first embodiment denotes the same or equivalent components.

In this second embodiment, it is noted that wheel speed difference detecting means 15 is provided instead of the yawing detecting means 3 of the above-described first embodiment, and the other components are the same as those in the first embodiment described above.

The wheel speed difference detecting means 15 produces the speed difference of the left and right wheels Wrl and Wrr, and the speed difference is inputted to steering wheel turning angle presuming means 4. Thus, the steering wheel turning angle $\delta p$ can be presumed from the speed difference of the left and right wheels. An error is obtained from the presumed steering wheel turning angle S of the steering wheel turning angle sensor 2, and the same process as that in the first embodiment is carried out, thereby obtaining a substantially accurate steering wheel turning angle $\delta'$. Thus, the same advantages as those in the first embodiment can be provided.

Therefore, the invention allow a substantially accurate steering wheel turning angle to be obtained irrespective of the attaching state of the steering wheel turning angle sensor to the steering wheel. Moreover the angle is corrected gradually within a predetermined time, thereby avoiding the abrupt correction control of the yawing of the vehicle.

## Claims

1. A method for controlling yawing of a vehicle on the basis of the output (S) of a steering wheel turning angle sensor (2) attached to a steering wheel (H) comprising the steps of obtaining a presumed steering wheel turning angle (δp), and gradually correcting the output value (S) of said steering wheel turning angle sensor, on the basis of an error between said presumed steering wheel turning angle (δp) and the steering wheel turning angle output from said steering wheel turning angle sensor, over a predetermined period of time (Tc).

2. A method as claimed in claim 1, wherein said step of obtaining the presumed steering wheel turning angle includes detecting the yaw rate of the vehicle.

3. A method as claimed in claim 2, wherein said step of obtaining the presumed steering wheel turning angle includes calculating a steering gain on the basis of a measured vehicle speed, and calculating the presumed steering wheel turning angle on the basis of the detected yaw rate and the calculated steering gain.

4. A method as claimed in claim 1, wherein said step of obtaining the presumed steering wheel turning angle includes detecting a difference between wheel speeds of left and right wheels of the vehicle.

5. A method as claimed in claim 4, wherein said step of obtaining the presumed steering wheel turning angle includes calculating a steering gain on the basis of a measured vehicle speed, and calculating the presumed steering wheel turning angle on the basis of the detected difference between wheel speeds of the left and right wheels and the calculated steering gain.

6. A steering control system, for controlling yawing of a vehicle, the system comprising: a steering wheel turning angle sensor (2) attached to a steering wheel (H) to detect a steering wheel turning angle (S); means for calculating a presumed steering wheel turning angle ($\delta_p$); means for correcting the output value (S) of said steering wheel turning angle sensor, on the basis of an error between said presumed said steering wheel turning angle ($\delta_p$) and the steering wheel turning angle output from said steering wheel turning angle sensor, over a predetermined period of time (Tc); and means for controlling yawing of the vehicle on the basis of the corrected output value of the steering wheel turning angle sensor.

7. A control system as claimed in claim 6, comprising yawing detecting means (3) for detecting the yawing state of the vehicle, the steering wheel turning angle presuming means (4) obtaining a presumed steering wheel turning angle ($\delta_p$) from the yawing state.

8. A control system as claimed in claim 7, wherein said steering wheel turning angle presuming means (4) determines the presumed steering wheel turning angle from a steering gain (G) dependent on a measured vehicle speed and a yaw rate (R) output as the yawing state from said yawing detecting means.

9. A control system as claimed in claim 8, wherein said steering wheel turning angle presuming means (4) determines the presumed steering wheel turning angle by dividing the yaw rate (R) by the steering gain (G).

10. A control system as claimed in claim 6, comprising wheel speed difference detecting means (15) for detecting the difference between the speeds of left and right wheels (Sl,Sr) of the vehicle, the steering wheel turning angle presuming means (4) obtaining the presumed steering wheel turning angle (δp) from said difference between the left and right wheel speeds.

11. A control system as claimed in claim 10, wherein said steering wheel turning angle presuming means (4) determines the presumed steering wheel turning angle from a steering gain (G) dependent on a measured vehicle speed and the difference between the left and right wheel speeds of the vehicle.

12. A control system as claimed in claim 8, 9 or 11, wherein said steering wheel turning angle presuming means is adapted to correct the steering gain.

**Patentansprüche**

1. Verfahren zur Kontrolle der Spurabweichung eines Fahrzeugs auf Grundlage der Ausgabe (S) eines am Lenkrad (H) angebrachten Lenkraddrehwinkelsensors (2), gekennzeichnet durch Ermitteln eines mutmaßlichen Lenkraddrehwinkels ($\delta_p$) und Berichtigen des Ausgabewerts (S) des Lenkraddrehwinkelsensors nach und nach über eine vorbestimmte Zeit (Tc) auf Grundlage des Fehler zwischen dem mutmaßlichen Lenkraddrehwinkel ($\delta_p$) und der Lenkraddrehwinkelausgabe des Lenkraddrehwinkelsensors.

2. Verfahren nach Anspruch 1, wobei der Schritt des Ermittelns des mutmaßlichen Lenkraddrehwinkels das Erfassen der Spurabweichungsgeschwindigkeit des Fahrzeugs umfaßt.

3. Verfahren nach Anspruch 2, wobei der Schritt des Ermittelns des mutmaßlichen Lenkraddrehwinkels das Berechnen eines Lenkresultats aus einer gemessenen Fahrzeuggeschwindigkeit umfaßt sowie das Berechnen des mutmaßlichen Lenkraddrehwinkels aus der erfaßten Spurabweichungsgeschwindigkeit und dem berechneten Lenkresultat.

4. Verfahren nach Anspruch 1, wobei der Schritt des Ermittelns des mutmaßlichen Lenkraddrehwinkels das Erfassen eines Radgeschwindigkeits-UnterschiedS zwischen den linken und den rechten Räder des Fahrzeugs umfaßt.

5. Verfahren nach Anspruch 4, wobei der Schritt des Ermittelns des mutmaßlichen Lenkraddrehwinkels ein Berechnen des Lenkresultats auf Grundlage einer gemessenen Fahrzeuggeschwindigkeit umfaßt und ein Berechnen des mutmaßlichen Lenkraddrehwinkels auf Grundlage des erfaßten Unterschieds in den Radgeschwindigkeiten zwischen den linken und rechten Räder und des berechneten Lenkresultats.

6. Lenkkontrollsystem zur Kontrolle der Spurabweichung eines Fahrzeugs, gekennzeichnet durch einen am Lenkrad (H) angebrachten Lenkraddrehwinkelsensor (2), der einen Lenkraddrehwinkel (S) erfaßt,
Einrichtungen zur Berechnung eines mutmaßlichen Lenkraddrehwinkels ($\delta_p$),
Einrichtungen zur Berichtigung des Ausgabewerts (S) des Lenkraddrehwinkelsensors über eine vorbestimmte Zeit (Tc) aus dem Fehler zwischen dem mutmaßlichen Lenkraddrehwinkel ($\delta_p$) und der Lenkraddrehwinkelausgabe des Lenkraddrehwinkelsensors, und
Einrichtungen zur Kontrolle der Spurabweichung des Fahrzeugs auf Grundlage des berichtigten Ausgabewerts des Lenkraddrehwinkelsensors.

7. Kontrollsystem nach Anspruch 6, gekennzeichnet durch Spurabweichungs-Erfassungseinrichtungen (3) zur Erfassung des Spurabweichungszustands des Fahrzeugs, wobei die Lenkraddrehwinkel-Schätzeinrichtung (4) aus dem Spurabweichungszustand einen mutmaßlichen Lenkraddrehwinkel ($\delta_p$) ermittelt.

8. Kontrollsystem nach Anspruch 7, wobei die Lenkraddrehwinkel-Schätzeinrichtung (4) den mutmaßlichen Lenkraddrehwinkel aus einem Lenkresultat (G) bestimmt und zwar abhängig von einer gemessenen Fahrzeuggeschwindigkeit und einem Spurabweichungsgeschwindigkeitswert (R), was den Spurabweichungzustand der Spurabweichungserfassungseinrichtung ergibt.

9. Kontrollsystem nach Anspruch 8, wobei die Lenkraddrehwinkel-Schätzeinrichtung (4) den mutmaßlichen Lenkraddrehwinkel durch Dividieren des Spurabweichungsgeschwindigkeit (R) mit dem Lenkresultat (G) bestimmt.

10. Kontrollsystem nach Anspruch 6, gekennzeichnet durch Radgeschwindigkeits-Differenzerfassungseinrichtungen (15), die den Unterschied in der Geschindigkeit zwischen den linken und rechten Rädern (Sl, Sr) des Fahrzeugs erfassen, und Lenkraddrehwinkel-Schätzeinrichtungen (4), die den mutmaßlichen Lenkraddrehwinkel ($\delta_p$) aus dem Unterschied in der Geschwindigkeit zwischen den linken und rechten Rändern ermitteln.

11. Kontrollsystem nach Anspruch 10, wobei die Lenkraddrehwinkel-Schätzeinrichtung (4) den mutmaßlichen Lenkraddrehwinkel aus einem Lenkresultat (G) bestimmt und zwar abhängig von der gemessenen Fahrzeuggeschwindigkeit und dem Unterschied in der Geschwindigkeit zwischen den linken und rechten Rädern des Fahrzeugs.

12. Kontrollsystem nach den Ansprüchen 8, 9 oder 11, dadurch gekennzeichnet, daß die Schätzeinrichtung für den Lenkraddrehwinkel das Lenkresultat berichtigen kann.

**Revendications**

1. Méthode pour contrôler le lacet d'un véhicule à partir de la valeur de sortie (S) d'un détecteur d'angle de rotation d'un volant de direction (2) fixé à un volant de direction (H), comprenant les étapes consistant à déterminer un angle estimé de rotation du volant de direction (δp), et à corriger progressivement la valeur de sortie (S) dudit détecteur d'angle de rotation du volant de direction, à partir d'une erreur entre ledit angle estimé de rotation du volant de direction (δp) et la valeur d'angle de rotation du volant de direction fournie par ledit détecteur d'angle de rotation du volant de direction, sur un intervalle de temps prédéterminé (Tc).

2. Méthode selon la revendication 1, caractérisée en ce que ladite étape de détermination de l'angle estimé de rotation du volant de direction comprend la détection de la vitesse de lacet du véhicule.

3. Méthode selon la revendication 2, caractérisée en ce que ladite étape de détermination de l'angle estimé de rotation du volant de direction comprend le calcul d'un gain de direction à partir d'une mesure de la vitesse du véhicule, et le calcul de l'angle estimé de rotation du volant de direction à partir de la vitesse de lacet détectée et du gain de direction calculé.

4. Méthode selon la revendication 1, caractérisée en ce que ladite étape de détermination de l'angle estimé de rotation du volant de direction comprend la détection d'une différence entre les vitesses des roues gauches et droites du véhicule.

5. Méthode selon la revendication 4, caractérisée en ce que ladite étape d'obtention de l'angle estimé de rotation du volant de direction comprend le calcul d'un gain de direction à partir d'une mesure de la vitesse du véhicule, et le calcul d'un angle estimé de rotation du volant de direction à partir de la différence détectée entre les vitesses des roues gauches et droites et du gain de direction calculé.

6. Système de contrôle de direction, pour contrôler le lacet d'un véhicule, le système comprenant : un détecteur d'angle de rotation d'un volant de direction (2) fixé sur un volant de direction (H) pour détecter un angle de rotation du volant de direction (S) ; un moyen permettant de calculer un angle estimé de rotation du volant de direction (δp) ; un moyen permettant de corriger la valeur de sortie (S) dudit détecteur d'angle de rotation du volant de direction à partir d'une erreur entre ledit angle estimé de rotation du volant de direction (δp) et la valeur d'angle de rotation du volant de direction fournie par le détecteur d'angle de rotation du volant de direction sur un intervalle de temps prédéterminé (Tc) ; et un moyen permettant de contrôler le lacet du véhicule à partir de la valeur de sortie corrigée du détecteur d'angle de rotation du volant de direction.

7. Système de contrôle selon la revendication 6, caractérisé en ce qu'il comprend un moyen de détection du lacet (3) permettant de détecter la situation de lacet d'un véhicule, le moyen d'estimation de l'angle de rotation du volant de direction (4) déterminant un angle estimé de rotation du volant de direction (δp) à partir de la situation de lacet.

8. Système de contrôle selon la revendication 7, caractérisé en ce que ledit moyen d'estimation d'angle de rotation du volant de direction (4) détermine l'angle estimé de rotation du volant de direction à partir d'un gain de direction (G) luimême déterminé à partir d'une mesure de la vitesse du véhicule et d'une vitesse de lacet (R) fournie en tant que situation de lacet par ledit moyen de détection de lacet.

9. Système de contrôle selon la revendication 8, caractérisé en ce que ledit moyen d'estimation d'angle de rotation du volant de direction (4) détermine l'angle estimé de rotation du volant de direction en divisant la vitesse de lacet (R) par le gain de direction (G).

**10.** Système de contrôle selon la revendication 6, caractérisé en ce qu'il comprend un moyen de détection de différence de vitesse entre les roues (15) permettant de détecter la différence entre les vitesses des roues gauches et droites (Sl, Sr) du véhicule, le dispositif d'estimation d'angle de rotation du volant de direction (4) déterminant l'angle estimé de rotation du volant de direction (δp) à partir de ladite différence entre les vitesses des roues gauches et droites.

**11.** Système de contrôle selon la revendication 10, caractérisé en ce que ledit moyen d'estimation d'angle de rotation du volant de direction (4) détermine l'angle estimé de rotation du volant de direction à partir d'un gain de direction (G) luimême déterminé à partir d'une mesure de la vitesse du véhicule et de la différence entre les vitesses des roues gauches et droites du véhicule.

**12.** Système de contrôle selon la revendication 8, 9 ou 11 caractérisé en ce que ledit moyen d'estimation de l'angle de rotation du volant de direction est adapté pour corriger le gain de direction.

FIG. 1.

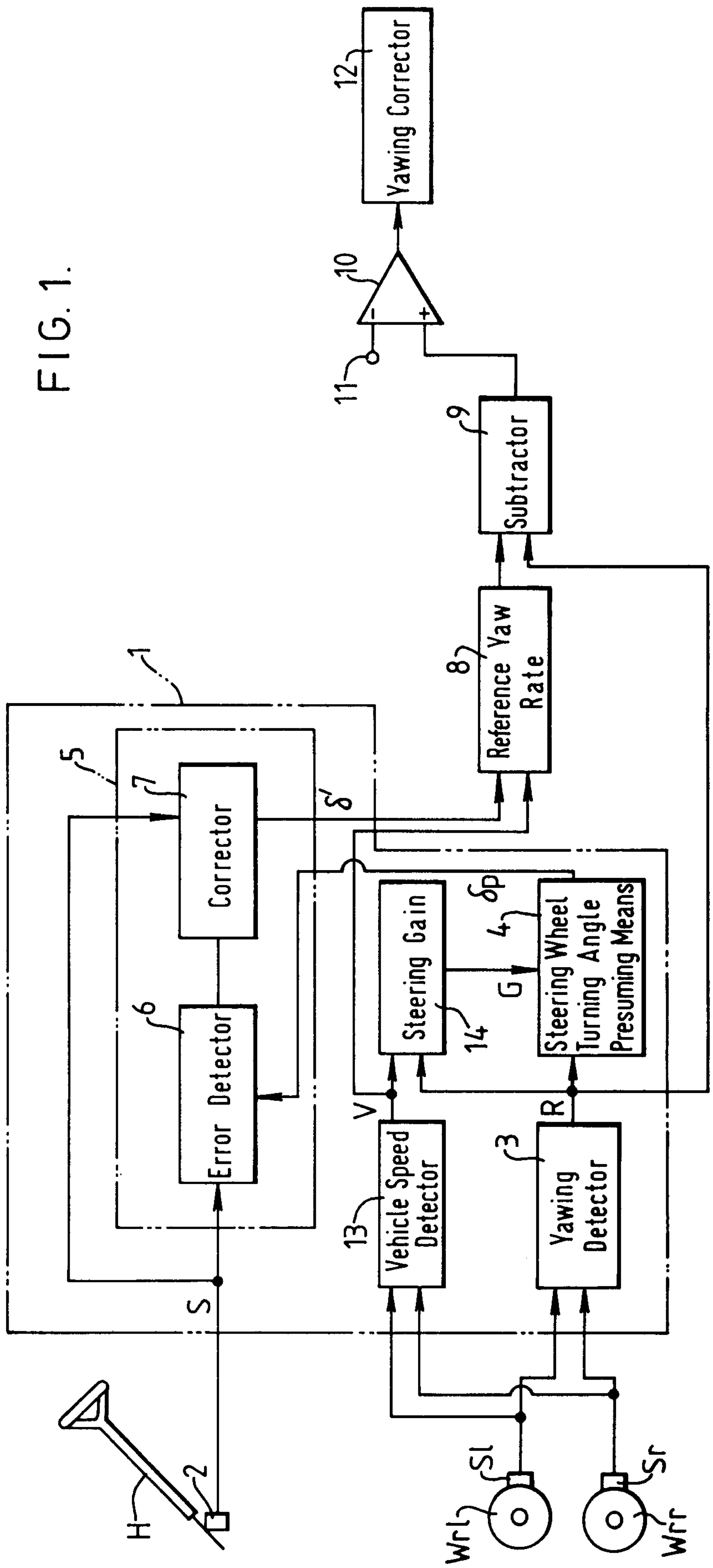
Yawing Corrector
12
10
11
Subtractor
9
Reference Yaw Rate
8
1
5
7
Corrector
δ'
Error Detector
6
Steering Gain
14
G
δp
4
Steering Wheel Turning Angle Presuming Means
V
R
Vehicle Speed Detector
13
Yawing Detector
3
S
H
2
Sl
Sr
Wrl
Wrr

FIG. 2.

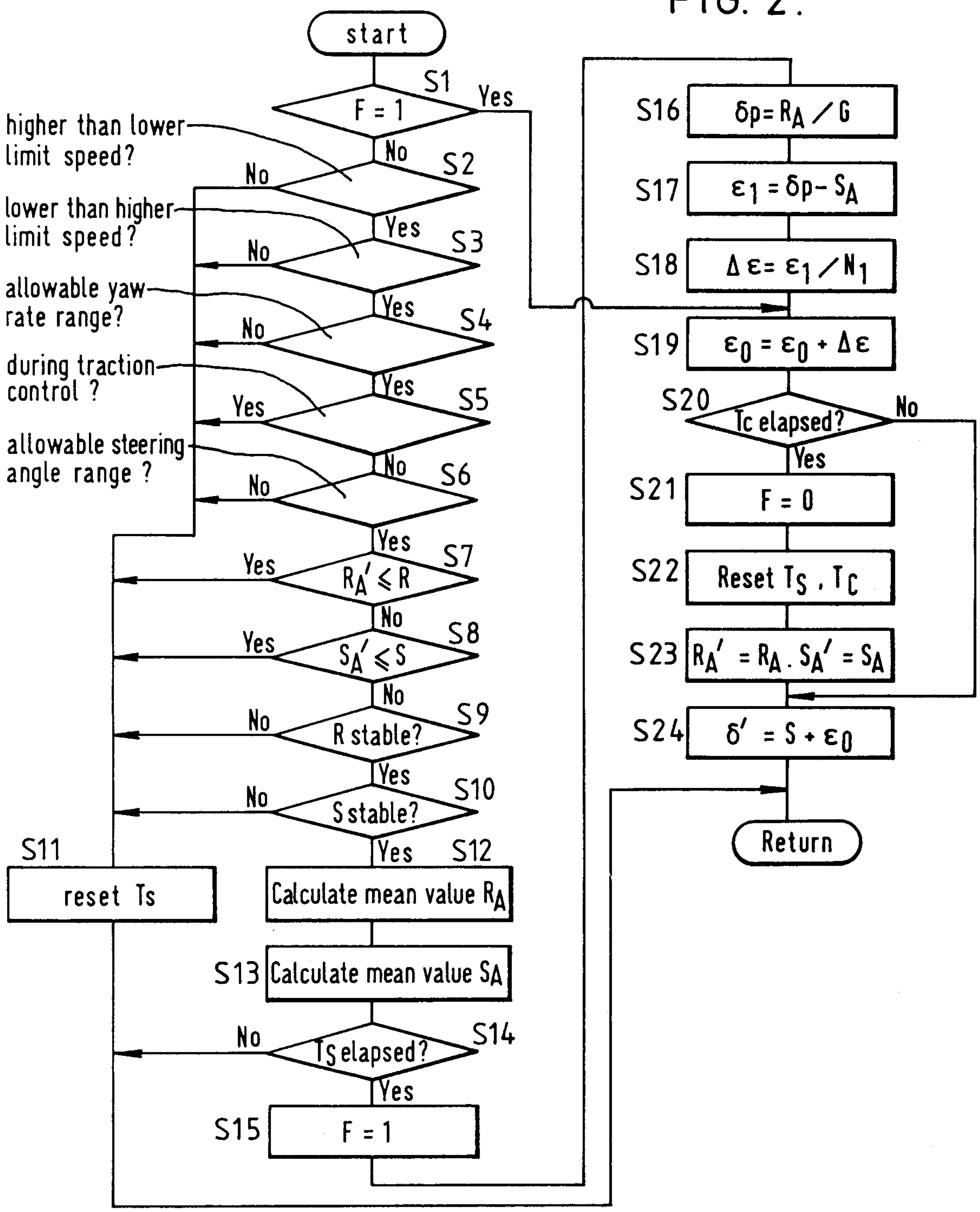
start
S1
F = 1
Yes
No
higher than lower limit speed?
S2
No
Yes
lower than higher limit speed?
S3
No
Yes
allowable yaw rate range?
S4
No
Yes
during traction control ?
S5
Yes
No
allowable steering angle range ?
S6
No
Yes
S7
$R_A' \leqslant R$
Yes
No
S8
$S_A' \leqslant S$
Yes
No
S9
R stable?
No
Yes
S10
S stable?
No
Yes
S11
reset Ts
S12
Calculate mean value $R_A$
S13
Calculate mean value $S_A$
S14
$T_S$ elapsed?
No
Yes
S15
F = 1
S16
$\delta p = R_A / G$
S17
$\varepsilon_1 = \delta p - S_A$
S18
$\Delta\varepsilon = \varepsilon_1 / N_1$
S19
$\varepsilon_0 = \varepsilon_0 + \Delta\varepsilon$
S20
Tc elapsed?
No
Yes
S21
F = 0
S22
Reset $T_S$, $T_C$
S23
$R_A' = R_A$. $S_A' = S_A$
S24
$\delta' = S + \varepsilon_0$
Return

FIG. 3.

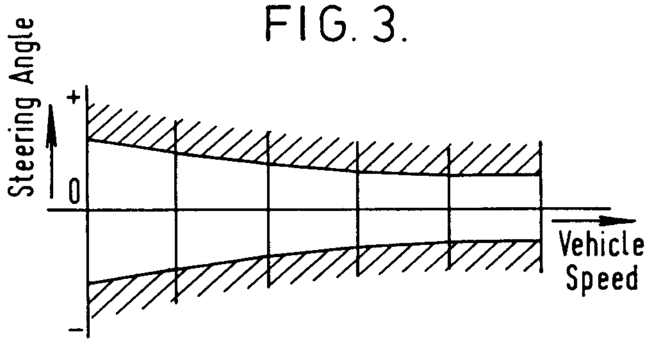


FIG. 5.

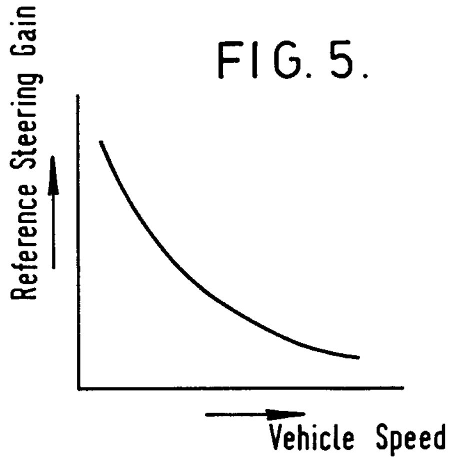


FIG. 4.

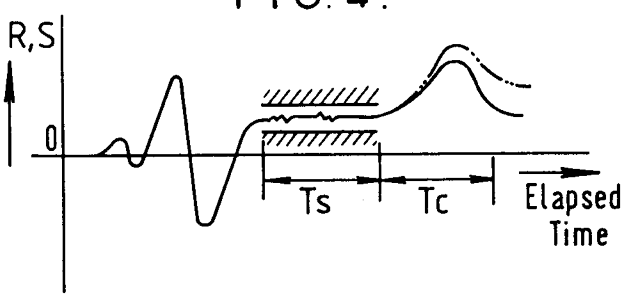


FIG. 6.

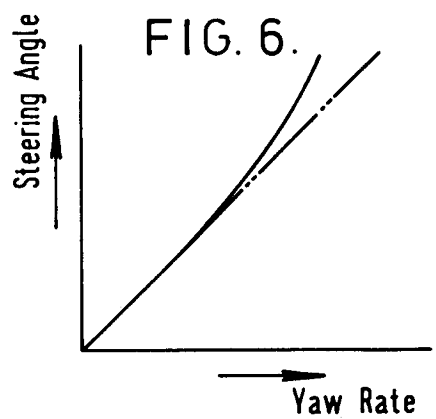


FIG. 7.

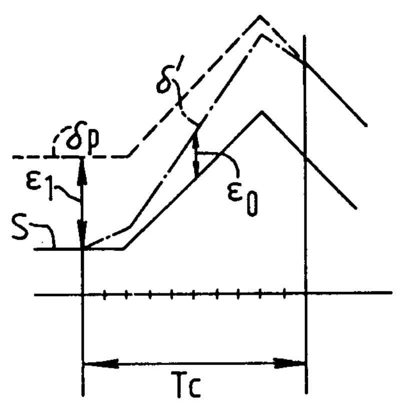

FIG. 8.

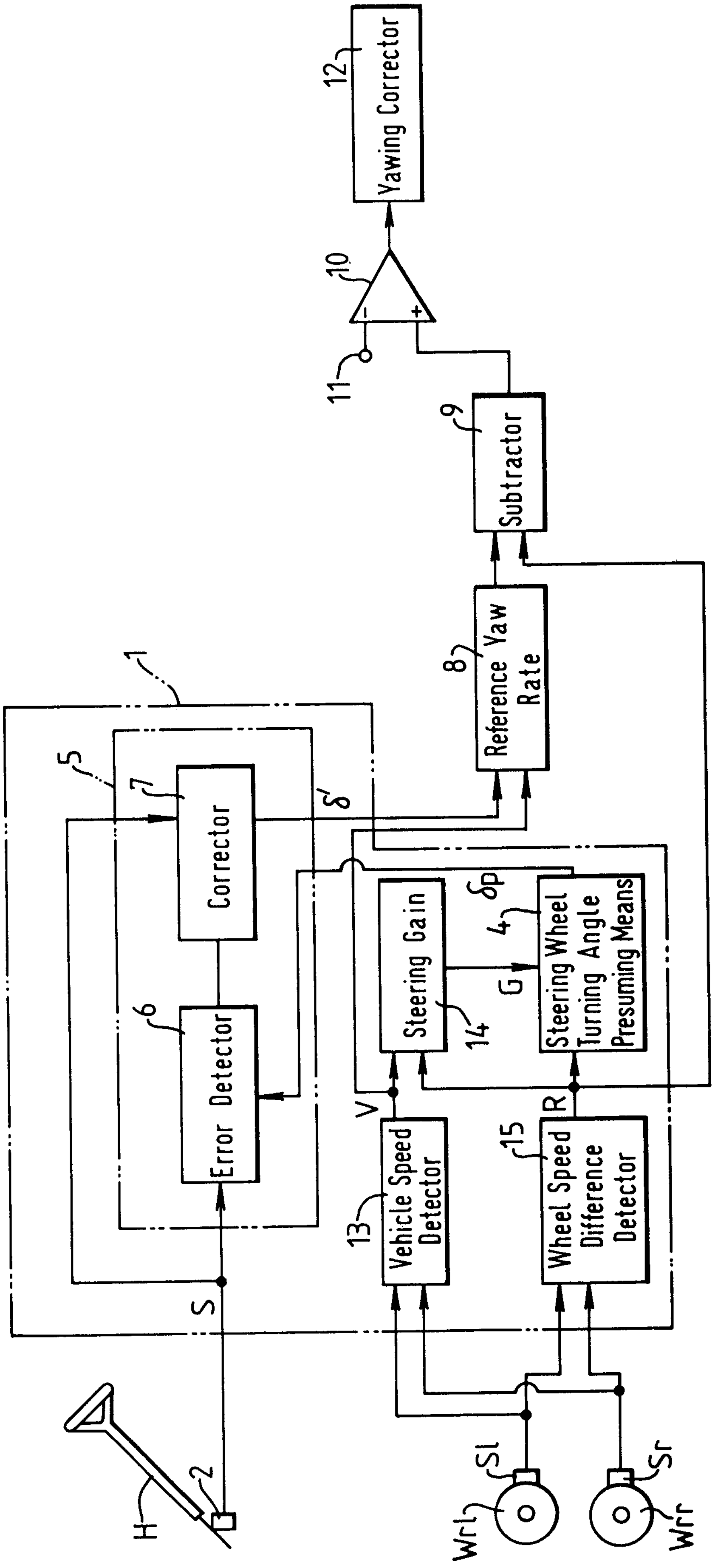
Yawing Corrector
12
10
11
Subtractor
9
Reference Yaw Rate
8
1
5
7
Corrector
δ'
6
Error Detector
Steering Gain
14
δp
4
G
Steering Wheel Turning Angle Presuming Means
V
R
13
Vehicle Speed Detector
15
Wheel Speed Difference Detector
S
H
2
Sl
Sr
Wrl
Wrr